# EUROPÄISCHE PATENTSCHRIFT

(11) **EP 2 529 850 B1**
(45) Veröffentlichungstag und Bekanntmachung des Hinweises auf die Patenterteilung: **11.09.2013**
(21) Anmeldenummer: 11168102.9
(22) Anmeldetag: 30.05.2011
(51) Int. Cl.: B21D 5/02, G01B 5/24, G01B 11/26

(54) **Biegewinkelsensor und Verfahren zum Messen eines Biegewinkels**
Bending angle sensor and method for measuring a bending angle
Capteur d'angle de pliage et procédé de mesure d'un angle de pliage

(43) Veröffentlichungstag der Anmeldung: 05.12.2012
(60) Teilanmeldung: 13179482.8
(73) Patentinhaber: TRUMPF Werkzeugmaschinen GmbH + Co. KG, 71254 Ditzingen (DE)
(72) Erfinder: Janson, Marc, 70839 Gerlingen (DE); Dorsch, Lasse, 71672 Marbach (DE)
(74) Vertreter: Prüfer & Partner GbR European Patent Attorneys

(56) Entgegenhaltungen:
- EP-A1- 1 136 146
- DE-A1- 3 008 701
- DE-T2- 60 029 288

## Beschreibung

Die Erfindung betrifft einen Biegewinkelsensor wie er beispielsweise bei der Messung von Winkeln zwischen zwei Seiten eines Werkstückes zum Einsatz kommt, sowie ein Verfahren zum Messen eines Biegewinkels gemäß dem Oberbegriff des Anspruchs 1 bzw. 16.

Derartige Biegewinkelsensoren werden unter Anderem bei der Blechbearbeitung im Rahmen des Biegens von Blechen zu Profilen eingesetzt. Das Messprinzip beruht dabei im Allgemeinen darauf, dass eine feste Spitze eines Sensors in die Winkelbiegung des Werkstücks eingeführt wird, wobei eine in Vertikalrichtung verschiebbare Tastscheibe des Sensors jeden der beiden Schenkel des Werkstücks, die miteinander den zu messenden Winkel einschließen, berührt. Hierbei erfährt die Tastscheibe eine Auslenkung aus ihrer Ruheposition nach oben, die umso größer ist, je enger der Winkel ist, den die beiden Schenkel miteinander einschließen. Diese Verschiebung wird durch ein Messmittel erfasst und es wird unter Einbeziehung der Form des Werkzeugs die Größe des Winkels aus der vertikalen Verschiebung ermittelt.

Ein Biegesensor der genannten Art ist beispielsweise in der DE 600 29 288 T2 beschrieben. Gemäß dieser Druckschrift wird die vertikale Auslenkung eines Kontaktteils des Biegesensors durch einen Induktionsdetektor gemessen, bei dem das Prinzip der elektromagnetischen Induktivität verwendet wird.

Eine weitere Biegesensorvorrichtung ist in der DE 30 08 701 A1 beschrieben, wobei gemäß dieser Vorrichtung eine optische Messeinrichtung enthalten ist, welche parallel zu einem Taststab angeordnet ist und die vertikale Ausrichtung des Taststabes misst.

Schließlich ist in der EP 1 136 146 A1, welche den nächstliegenden Stand der Technik bildet, ein Sensor beschrieben, bei dem ein Taster an einem Bügel befestigt ist, der eine Vielzahl an vertikal angeordneten Leuchtdioden trägt, die relativ zu einem Positionsdetektor beweglich sind. Der Positionsdetektor ist fest an einem Umformstempel eines Umformwerkzeugs angebracht, so dass bei einer Vertikalbewegung des Tasters die Leuchtdioden relativ zum Positionsdetektor verschoben werden und die Verschiebung durch diesen erfasst werden kann.

Ausgehend von dem genannten Stand der Technik ist es eine Aufgabe der Erfindung, einen Biegewinkelsensor anzugeben, bei dem eine kompakte Bauweise möglich ist.

Diese Aufgabe wird durch einen Biegewinkelsensor nach Anspruch 1 sowie ein Verfahren nach Anspruch 16 gelöst. Bevorzugte Ausgestaltungen sind in den Unteransprüchen angegeben.

Ein Biegewinkelsensor gemäß den Ausführungsformen der Erfindung weist ein Gehäuse mit einer länglichen Ausnehmung auf, in der federnd gelagert ein Kulissenstein geführt ist, wobei an einem der länglichen Ausnehmung gegenüberliegenden Ende des Gehäuses eine untere Begrenzung für eine in dem Gehäuse aufzunehmende Tastscheibe vorhanden ist, wobei der Kulissenstein dafür ausgelegt ist, an einem Ende einer aufzunehmenden Tastscheibe anzugreifen, und wobei im Gehäuse mindestens ein Positionsdetektor zum Erfassen einer Verschiebung des Kulissensteins vorhanden ist.

Bei dem erfindungsgemäßen Biegewinkelsensor ist der Kulissenstein entlang der länglichen Ausnehmung verschiebbar. Dieser Kulissenstein dient dazu, direkt an einem oberen Ende einer Tastscheibe anzugreifen, die für den Betrieb des Biegewinkelsensors in das Gehäuse einzusetzen ist. Die Tastscheibe wird dabei zwischen dem federnd gelagerten Kulissenstein, der an dem einen Ende der Tastscheibe angreift, und der unteren Begrenzung, die an dem anderen Ende der Tastscheibe angreift, eingespannt und ist somit zusammen mit dem Kulissenstein in Longitudinalrichtung d.h. im Wesentlichen parallel zur Längsachse L verschiebbar.

Die Tastscheibe kann demzufolge einfach und mit wenigen Handgriffen ausgewechselt werden, wenn sie beispielsweise verschlissen ist oder wenn eine andere Tastscheibe eingesetzt werden soll. Es ist in diesem Zusammenhang anzumerken, dass konstruktionsbedingt eine Tastscheibe nicht den gesamten Winkelbereich zwischen 0° und 180° erfassen kann, so dass für verschiedene Winkelbereiche verschieden geformte Tastscheiben eingesetzt werden müssen. Ein Wechseln der Tastscheiben ist deshalb häufig notwendig, weswegen sich eine Zeitersparnis hierfür deutlich auswirkt.

Aufgrund der erfindungsgemäßen Konstruktion, wonach eine einzusetzende Tastscheibe zwischen Kulissensein und unterer Begrenzung festgeklemmt wird, ist ein zusätzlicher Bügel zur Anbringung und Führung der Tastscheibe, wie er in der EP 1 136 146 A1 beschrieben ist, nicht notwendig. Somit wird eine kompakte und Platz sparende Bauweise des Biegewinkelsensors ermöglicht.

Der Kulissenstein weist beispielsweise einen Vorsprung auf und ist dafür ausgelegt, mit seinem Vorsprung an einem Ende einer aufzunehmenden Tastscheibe anzugreifen. Durch den Vorsprung ist eine definierte Stelle für das Angreifen gegeben und es wird eine zusätzliche Stützfunktion für eine einzusetzende Tastscheibe bereitgestellt, insbesondere wenn diese eine korrespondierende Ausnehmung aufweist, in die der Vorsprung eingreifen kann.

Darüber hinaus kann der Kulissenstein um eine senkrecht zur Längsachse L des Gehäuses verlaufende Achse schwenkbar gelagert sein. Hierdurch wird das seitliche Einsetzen einer Tastscheibe erleichtert, wie dies nachstehend im Zusammenhang mit der Beschreibung der Ausführungsformen anhand der Zeichnungen verdeutlicht wird.

Gemäß einer weiteren Ausführungsform der Erfindung ist eine Lichtquelle an dem oder innerhalb des Kulissensteins vorhanden, wobei der Positionsdetektor ein optischer Positionsdetektor ist, der seitlich der Ausnehmung im Gehäuse angebracht ist. Bei einer Bewegung des Kulissensteins in Vertikalrichtung, welche erfolgt, wenn der Biegewinkelsensor mit eingesetzter Tastscheibe auf einem Werkstückwinkel aufgesetzt wird, verschiebt sich somit die Position der Lichtquelle in Bezug auf den Positionsdetektor, so dass die Verschiebung optisch erfasst werden kann.

Dies stellt eine Möglichkeit dar, den Kulissenstein gleichzeitig für die Festklemmung der Tastscheibe und für das Mitwirken an der optischen Positionsbestimmung einzusetzen. Auf diese Weise wird eine optimale Raumausnutzung innerhalb des Gehäuses erzielt und dadurch eine kompakte Bauweise begünstigt. Ist die Lichtquelle, bei der es sich beispielsweise um eine Leuchtdiode handeln kann, in dem Kulissenstein aufgenommen, so kann dieser entweder aus einem lichtdurchlässigen Material ausgebildet sein oder aber einen Spalt aufweisen, durch welchen das von der Lichtquelle erzeugte Licht nach außen treten kann. Alternativ dazu kann die Lichtquelle auch an einer festen Stelle im Gehäuse positioniert sein und am oder im Kulissenstein ein optisches Element vorhanden sein, das den von der Lichtquelle ausgesendeten Lichtstrahl zum optischen Positionsdetektor lenkt.

Gemäß einer weiteren Ausführungsform ist am oder innerhalb des Kulissensteins ein Strahlteiler vorhanden, welcher einen von einer im Gehäuse vorhandenen Lichtquelle kommenden Lichtstrahl in zwei unter einem Winkel von 180° zueinander verlaufende Teilstrahlen aufspaltet, wobei jeweils ein Positionsdetektor zu beiden Seiten der Ausnehmung am Gehäuse angebracht ist. Bei dieser Ausführungsform wird somit ein Lichtstrahl, der von einer Lichtquelle ausgehend auf den Kulissenstein auftrifft, in zwei Teilstrahlen aufgespaltet, welche in zueinander entgegengesetzte Richtungen verlaufen, wobei jeder der Teilstrahlen dafür ausgelegt ist, auf einen der seitlichen optischen Positionsdetektoren aufzutreffen. Dabei kann die Lichtquelle selbst ebenfalls am Kulissenstein angebracht sein oder aber außerhalb des Kulissensteins auf dem Gehäuse, beispielsweise oberhalb der Ausnehmung.

Diese Ausgestaltung ist insbesondere deshalb günstig, weil nicht nur die Größe des Winkels eines gebogenen Werkstücks selbst gemessen werden kann, sondern auch eine Verkippung des Werkstücks gegenüber dem Biegewinkelsensor. Bei einer Verkippung des Werkstücks, d.h., wenn die Tastscheibe nicht senkrecht zur Winkelhalbierenden des Winkels des Werkstücks auf den beiden den Winkel einschließenden Schenkeln aufliegt, verschiebt sich die Tastscheibe mit ihrem unteren Ende gegenüber dem Gehäuse, was zu einer Verschwenkung des Kulissensteins um seine Achse führt. Dies hat zur Folge, dass die beiden Teilstrahlen, welche durch die Strahlteilung entstanden sind, in unterschiedlichen Höhen auf die beiden seitlichen optischen Positionsdetektoren auftreffen. Aus der Höhendifferenz kann auf die Verkippung rückgeschlossen und diese bei der Messung des Winkels berücksichtigt werden. Eine solche Berücksichtigung der Verkippung ist bei dem in der EP 1 136 146 A1 beschriebenen Sensor nicht möglich. Im Fall des dort beschriebenen Positionsdetektors geht man vielmehr davon aus, dass der Einfluss der Verkippung vernachlässigbar ist, was bedeutet, dass eine Messungenauigkeit in Kauf genommen wird.

Gemäß einer Ausführungsform ist der Strahlteiler als Prisma ausgebildet. Hierbei kann die Lichtquelle, bei der es sich beispielsweise um eine Leuchtdiode (LED) handeln kann, innerhalb des Prismas angebracht sein. Auf diese Weise wird eine besonders Raum sparende Konstruktion verwirklicht, da für die Lichtquelle kein zusätzlicher Platz im Gehäuse ausgespart sein muss. Somit trägt auch diese Ausführungsform zu einer kompakten Bauweise bei.

Bei einer weiteren Ausgestaltung ist die untere Begrenzung als eine Ausbuchtung ausgebildet, welche an dem der länglichen Ausnehmung gegenüberliegenden Ende des Gehäuses vorhanden ist. Hierdurch wird eine besonders einfache Art der unteren Begrenzung verwirklicht. Die Ausbuchtung kann dabei einstückig mit dem Gehäuse gefertigt sein, so dass kein zusätzlicher Fertigungsschritt für ihre Ausbildung erforderlich ist. Eine eingesetzte Tastscheibe ist bei dieser Ausführungsform zwischen den Kulissenstein und die Ausbuchtung geklemmt und wird durch die Federkraft der elastischen Vorspannung des federnd gelagerten Kulissensteins in ihrer Position gehalten.

Das Gehäuse kann zweiteilig ausgebildet sein, wobei in jeder Gehäusehälfte eine Ausnehmung mit einem darin geführten und elastisch vorgespannten Kulissenstein vorhanden ist. Auf diese Weise ist es möglich, zwei Tastscheiben in den Winkelsensor einzusetzen, wobei deren relative Verschiebungen zueinander bestimmt werden sollen.

Die Erfindung betrifft auch eine vorteilhafte Ausführung des Winkelsensors der vorgenannten Art, bei dem eine Tastscheibe aufgenommen ist, welche zwischen den Kulissenstein und die untere Begrenzung geklemmt ist, wobei die Tastscheibe an einem ihrer Enden eine erste Vertiefung aufweist, in welche der Vorsprung des Kulissensteins eingreifen kann. Auf diese Weise ist die Tastscheibe sicher durch den Kulissenstein gehalten und es bedarf keiner weiteren Führung für die Tastscheibe.

Nach dem Einsetzen der mindestens einen Tastscheibe kann ein Erkennungsprozess durchgeführt werden, bei dem z.B. anhand der Abmessungen der eingesetzten Tastscheibe durch Vergleich mit einer eingespeicherten Tabelle der Tastscheibentyp ermittelt wird. Anschließend kann eine Kalibrierung vorgenommen werden. Hierbei wird die Lage der Ausgangsposition der Tastscheibe(n) vor dem Einsatz, d.h. in der Praxis vor dem Ausführen eines Biegevorgangs, als Nullpunkt gespeichert. Der Kalibrierungsvorgang kann gegebenenfalls nach einem vorbestimmten Zeitintervall, nach einer vorgegebenen Anzahl an Messungen (entsprechend einer Zahl an Biegevorgängen) und/oder nach individueller Abschätzung wiederholt werden, um Verschiebungen des Nullpunkts aufgrund von Wärmegängen oder Wanderungen zu kompensieren. Die benötigten Speichermittel können im Biegewinkelsensor selbst oder in einer externen Vorrichtung, mit welcher der Biegewinkelsensor verbunden werden kann, vorhanden sein.

Bei einer Ausführungsform ist die erste Vertiefung der Tastscheibe V-förmig ausgebildet, wobei der Vorsprung des Kulissensteins vorzugsweise so geformt ist, dass er passgenau in die erste Vertiefung der Tastscheibe einführbar ist. Diese Ausführungsform ermöglicht ein leichtes Einsetzen bzw. Auswechseln der Tastscheibe, während gleichzeitig ein besonders sicherer Halt gewährleistet ist.

Gemäß einer weiteren Ausführungsform weist die Tastscheibe an ihrem zweiten Ende eine Gabelung auf, welche zwei Schenkel ausbildet, zwischen denen eine zweite Vertiefung eingeformt ist. Mit dieser zweiten Vertiefung kann die Tastscheibe an der unteren Begrenzung gehalten werden. Die beiden Schenkel der Tastscheibe dienen dazu, an jeweils einer Stelle der beiden Schenkel des Werkstückwinkels angelegt zu werden. Bei dieser Ausführungsform wird eine optimale Halterung der Tastscheibe im Ruhezustand, d.h. in dem Zustand, in dem die untere Begrenzung an der zweiten Vertiefung angreift, gewährleistet.

Ein Verfahren zum Messen eines Biegewinkels gemäß einer Ausführungsform der Erfindung umfasst das Aufsetzen eines Biegewinkelsensors, in dem eine Tastscheibe aufgenommen ist, auf ein Werkstück, so dass eine am Ende vorhandene Spitze des Gehäuses in einer Biegung des Werkstücks aufliegt, und Messen der Verschiebung der Tastscheibe in Bezug auf das Gehäuse.

Bei dem erfindungsgemäßen Verfahren wird somit ein Absolutwert bezüglich der Verschiebung der Tastscheibe in Longitudinalrichtung, d.h. parallel zur Längsachse des Gehäuses gemessen. Dies steht im Gegensatz zu dem in der EP 1 136 146 A1 beschriebenen Verfahren, wonach stets nur die Verschiebungen zweier Tastscheiben relativ zueinander gemessen werden. Bei dieser bekannten Art der Messung ist die Auflösung, d.h. die Verschiebung der Tastscheiben zueinander, sehr gering. Eine Erhöhung der Auflösung ist bei jener Art der Messung konstruktionsbedingt begrenzt. Demgegenüber hat die Absolutmessung, wie sie gemäß der Erfindung verwirklicht wird, den Vorteil, dass die Winkelmessung mit einer hohen Auflösung erfolgt.

Bei einer weiteren Ausgestaltung des Verfahrens wird ein Biegewinkelsensor eingesetzt, in dem zwei Tastscheiben vorhanden sind, wobei die Verschiebung jeder der Tastscheiben in Bezug auf das Gehäuse gemessen und eine Differenz der beiden resultierenden Verschiebungen ermittelt wird. Mit anderen Worten kann auch mit dem erfindungsgemäßen Biegewinkelsensor eine Art der Relativmessung eines Biegewinkels erfolgen. Im Gegensatz zu dem vorstehend geschilderten Relativmessverfahren nach der EP 1 136 146 A1 ist das modifizierte Relativmessverfahren der Erfindung aus zwei Absolutmessverfahren zusammengesetzt. Somit wird jeweils die Verschiebung einer Tastscheibe in Bezug auf die Spitze des Gehäuses gemessen und aus diesen beiden Absolutmessungen wird durch Differenzbildung eine Verschiebung der beiden Tastscheiben zueinander ermittelt. Dies kann auf elektronischem Wege erfolgen.

Das beschriebene Verfahren hat den Vorteil, dass sich Messfehler, die bei der Absolutmessung z.B. dadurch entstehen können, dass sich die Gehäusespitze in weiches Material eindrückt oder dass sich die Gehäusespitze beim Entspannen von dem zu messenden Blechstück abhebt, gegeneinander ausmitteln. Somit können die Vorteile einer Absolutmessung genutzt werden, ohne dass deren Nachteile in Kauf genommen werden müssen. Das Messergebnis dieser modifizierten Relativmessung ist wiederum unabhängig vom Gehäuse.

In einer Alternative können auch eine Absolutmessung (Verschiebung einer Tastscheibe in Bezug auf die Gehäusespitze) und eine Relativmessung (Verschiebung zweier Tastscheiben zueinander) kombiniert werden. Auf diese Weise wird eine Absolutmessung erhalten, deren Ergebnis bei Bedarf durch die Relativmessung korrigiert werden kann.

Wenn eine oder mehrere Tastscheiben auszuwechseln sind, kann das Verfahren weiter das Einsetzen der Tastscheibe, das Messen der Länge der eingesetzten Tastscheibe und das Vergleichen des gemessenen Wertes mit einer eingespeicherten Tabelle zur Identifizierung der eingesetzten Tastscheibe vor dem Schritt des Aufsetzens des Biegewinkelsensors auf das Werkstück umfassen. Mit unterschiedlich langen (z.B. 50 mm oder 80 mm) bzw. verschiedenartig ausgebildeten Tastscheiben lassen sich verschiedene Biegewinkelmessbereiche oder Anwendungsfälle abdecken. Dabei liegt die Längendifferenz der Tastscheiben im Allgemeinen im Millimeterbereich, wobei eine Codierung der Länge für die Identifizierung der Tastscheibe im Bereich der 1/100 mm-Stelle liegt. Lediglich als Beispiel seien folgende Typen von Tastscheiben angeführt: Tastscheibe A: 50,12 mm; Tastscheibe B: 60,08 mm; Tastscheibe C: 80,02 mm. Bei den angegebenen Werten für die Länge dient der Wert im Nachkommabereich der Identifizierung der Tastscheiben (z.B. der verschiedenen Formen von Tastscheiben). Dieser Wert im Nachkommabereich wird bei der Messung berücksichtigt und geht nicht als Fehler in die Biegewinkelbestimmung ein.

Die Erfindung betrifft auch einen Biegewinkelsensor zur Messung des Biegewinkels von Werkstücken mit einem Gehäuse, welches für die Aufnahme mindestens einer Tastscheibe geeignet ist, so dass die Tastscheibe in dem Gehäuse parallel zur Längsachse L des Gehäuses beweglich ist, wobei ein Positionsdetektor vorhanden ist, um eine Verschiebung der Tastscheibe zu detektieren, und wobei eine Aufnahme für eine Batterie oder einen Akkumulator vorhanden ist, die leitend mit dem Positionsdetektor verbunden ist. Ein so ausgebildeter Biegewinkelsensor kann unabhängig von einer äußeren Energiequelle arbeiten. Dies bedeutet, dass der Biegewinkelsensor als ein Handgerät ausgebildet sein kann, das nicht mit einem anderen Gerät, beispielsweise einer Biegemaschine verbunden sein muss. Auf diese Weise sind auch Winkel an verdeckten Stellen eines Werkstücks messbar, in welche ein an einer Maschine angebrachter Sensor nicht einführbar ist. Aus diesem Grund hat ein gemäß der Erfindung ausgebildeter Biegewinkelsensor erweiterte Einsatzmöglichkeiten.

Der Winkelsensor kann insbesondere gemäß einer der zuvor beschriebenen Ausführungsformen ausgebildet sein. Dabei kann die Aufnahme für den Akkumulator oder die Batterie entweder innerhalb des Gehäuses ausgebildet sein oder in Form eines Aufsatzes vorhanden sein, welcher auf das Gehäuse des Winkelsensors aufsteckbar ist.

Bei einer weiteren Ausführungsform ist an der Außenseite des Gehäuses oder des Aufsatzes ein Anzeigeelement vorhanden, welches dafür ausgelegt ist, einen gemessenen Winkel für den Benutzer sichtbar zu machen. Selbstverständlich können über dieses Anzeigeelement auch andere Werte angezeigt werden, beispielsweise ein Hinweis auf die Art oder Größe der eingesetzten Tastscheibe.

Obgleich vorstehend insbesondere ein optischer Positionsdetektor beschrieben wurde, können auch andere Arten der Detektierung für die Verschiebung und/oder Verkippung der Tastscheibe eingesetzt werden. Hierbei sind insbesondere kapazitive oder induktive Detektoren für die Verschiebung und Hallsensoren oder Neigungssensoren für die Verkippung zu nennen.

In das Gehäuse oder das Zusatzmodul kann des Weiteren eine Auswertelektronik integriert sein, welche dafür ausgelegt ist, aus den von dem Positionssensor ermittelten Daten zumindest die Größe des gemessenen Winkels zu ermitteln. Auf diese Weise arbeitet der Sensor auch unabhängig von einer äußeren Auswertelektronik und ist damit völlig autark einzusetzen.

Weitere Merkmale und Vorteile der Erfindung ergeben sich anhand der nachfolgenden geschilderten Ausführungsbeispiele mit Bezug auf die beigefügten Zeichnungen.

In den Zeichnungen zeigen:
die Figuren 1A und 1B jeweilige Schnittansichten einer Ausführungsform eines erfindungsgemäßen Biegewinkelsensors, welche das Einsetzen einer Tastscheibe veranschaulichen;
Figur 2 die Ausführungsform der Figuren 1A und 1B mit einem optischen Positionsdetektor;
die Figuren 3A bis 3D eine Ausführungsform eines erfindungsgemäßen Biegewinkelsensors mit zwei seitlichen optischen Positionsdetektoren;
Figur 4 eine Ausführungsform eines erfindungsgemäßen Biegewinkelsensors in perspektivischer Darstellung;
Figur 5 eine weitere Ausführungsform eines erfindungsgemäßen Biegewinkelsensors in perspektivischer Darstellung;
Figur 6a eine Schnittansicht durch einen erfindungsgemäßen Biegewinkelsensor zur Verdeutlichung eines Messverfahrens; und
Figur 6b ein Diagramm zur Erläuterung des Messverfahrens.

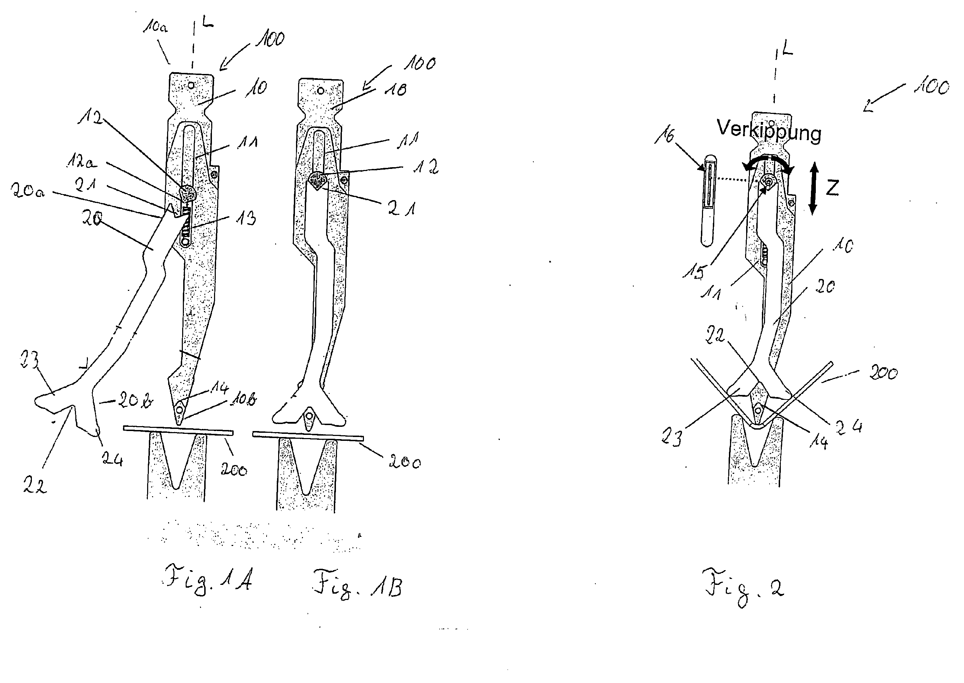

In den Figuren 1A und 1B ist ein Ausführungsbeispiel eines Biegewinkelsensors 100 gezeigt, welcher ein Gehäuse 10 mit einem oberen Ende 10a und einem unteren Ende 10b umfasst. Das untere Ende 10b ist zum Ende hin verjüngt ausgebildet und dafür ausgelegt, auf ein Werkstück 200 aufgesetzt bzw. in eine Biegung oder Knickung eines Werkstücks 200 eingeführt zu werden, so dass der Biegewinkel gemessen werden kann. In den in den Figuren 1A und 1B gezeigten Fällen ist das Werkstück 200 nicht gebogen.

In einem Bereich in der Nähe des oberen Endes 10a des Gehäuses 10 ist eine längliche Ausnehmung 11 ausgebildet, die im Wesentlichen entlang der Längsachse L des Winkelsensors 100 verläuft. In der Ausnehmung 11 ist ein Kulissenstein 12 geführt, welcher über ein Federmittel 13, in der gezeigten Ausführungsform eine Zugfeder, nach unten vorgespannt ist. Der Kulissenstein 12 ist somit in Vertikalrichtung entlang der Ausnehmung 11 beweglich.

Darüber hinaus ist der Kulissenstein 12 jedoch auch verschwenkbar, und zwar um eine Achse, welche senkrecht zur Längsachse L des Winkelsensors verläuft.

Im Bereich des unteren Endes 10b des Gehäuses 10 ist eine untere Begrenzung 14 im Gehäuse angebracht, hier in Form einer Ausbuchtung, welche sich nach oben konisch verjüngt.

In Figur 1A ist eine Situation gezeigt, in der gerade eine Tastscheibe 20 in das Gehäuse 10 eingefügt wird. Hierzu wird der Kulissenstein 12 leicht verschwenkt so dass sein Vorsprung 12a gegenüber der Längsachse L des Biegewinkelsensors 100 versetzt ist. Dies erleichtert, wie zu erkennen ist, das Einsetzen der Tastscheibe 20.

Die Tastscheibe 20 ist länglich ausgebildet und weist ein erstes Ende 20a und zweites Ende 20b auf, wobei an dem ersten Ende 20a eine Vertiefung 21 ausgespart ist, die in der gezeigten Ausführungsform V-förmig ist und sich über die gesamte Breite des ersten Endes 20a der Tastscheibe 20 erstreckt. Bei verschwenkter Stellung des Kulissensteins 12, wie sie hier gezeigt ist, kann die Tastscheibe 20 so angelegt werden, dass der Vorsprung 12a des Kulissensteins 12 in der Vertiefung 21 aufgenommen wird. Sodann wird der Kulissenstein 12 über die Tastscheibe 20 gegen die Wirkung des Federmittels 13 nach oben gedrückt und die Tastscheibe 20 verschwenkt, bis sie mit ihrer unteren Vertiefung 22, welche zwei Schenkel 23 und 24 der Tastscheibe 20 trennt, auf der unteren Begrenzung 14 des Gehäuses 10 aufliegt, wie dies in Figur 1B gezeigt ist. Die Tastscheibe 20 ist in dieser Stellung zwischen dem Kulissenstein 12 und der unteren Begrenzung 14 fest eingespannt. Diese Position entspricht der Ruhestellung des Winkelsensors.

Mit nunmehrigem Bezug auf Figur 2 ist dort eine Schnittansicht des Biegewinkelsensors 100 der Figuren 1A und 1B gezeigt, wobei hier jedoch zusätzliche Elemente des Winkelsensors 100 sichtbar sind. Wie unter dem Bezugzeichen 15 angedeutet, befindet sich innerhalb des Kulissensteins 12 eine Lichtquelle, beispielsweise eine LED, welche einen gerichteten Lichtstrahl, der hier durch eine punktierte Linie angedeutet ist, aussendet. Zum Richten des Lichtstrahls kann ein optisches Hilfsmittel, beispielsweise ein Prisma vorhanden sein. Der Lichtstahl trifft auf einen seitlich angeordneten Positionsdetektor 16, der in der gezeigten Ausführungsform aus Gründen der Deutlichkeit der Darstellung außerhalb des Gehäuses 10 gezeigt ist. Tatsächlich ist der Positionsdetektor 16 jedoch innerhalb des Gehäuses 10 aufgenommen, wobei er im Wesentlichen parallel zur Ausnehmung 11 angeordnet ist.

In der gezeigten Ausführungsform ist der Biegewinkelsensor 100 auf ein Werkstück 200 aufgesetzt, das, wie gezeigt, unter einem Winkel von 90° gebogen ist. Das untere Ende 10b des Gehäuses 10 liegt in der Biegung des Winkels auf, wobei die beiden Schenkel 23, 24 der Tastscheibe 20 im Querschnitt jeweils einen Punkt eines der Schenkel des Werkstücks 200 berühren. In der gezeigten Stellung ist die Tastscheibe 20 gegenüber ihrer Ruhestellung, die in Figur 1B gezeigt ist, angehoben, was dadurch ersichtlich ist, dass die untere Vertiefung 22 der Tastscheibe 20 von der unteren Begrenzung 14 des Gehäuses 10 beabstandet ist. Es hat also eine Positionsverschiebung parallel zur Längsachse L in Z-Richtung stattgefunden, wie dies in der Figur angedeutet ist. Zusätzlich ist die Möglichkeit der Verkippung des Kulissensteins 12 durch die beiden gebogenen Pfeile angedeutet.

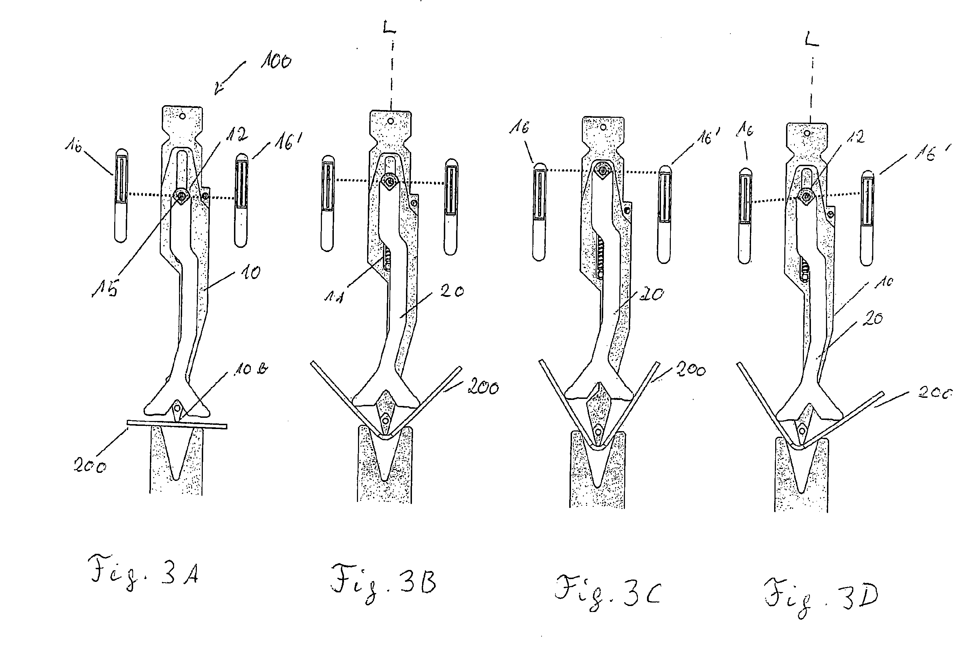

Die Figuren 3A bis 3D zeigen eine weitere Ausführungsform eines erfindungsgemäßen Biegewinkelsensors 100, welche sich von derjenigen der Figur 2 dadurch unterscheidet, dass hier zwei seitliche optische Positionsdetektoren 16, 16ʹ vorhanden sind, welche zu beiden Seiten der Ausnehmung 11 des Gehäuses 10 parallel zu dieser im Gehäuse 10 angeordnet sind (aus Gründen der Deutlichkeit der Darstellung sind die Positionsdetektoren 16, 16ʹ in der Figur außerhalb des Gehäuses 10 gezeigt).

In Figur 3A befindet sich der Biegewinkelsensor 100 in seiner Ruhestellung, in der das untere Ende 10b des Gehäuses 10 auf ein ungebogenes Werkstück 200 aufgesetzt ist.

In dem Kulissenstein 12 befindet sich neben der Lichtquelle 15 auch ein Strahlteiler (nicht gezeigt), welcher die von der Lichtquelle 15 ausgesendeten Strahlen in zwei Teilstrahlen (durch punktierte Linien angedeutet) teilt, die in entgegen gesetzten Richtungen zueinander verlaufen. Ein erster Teilstrahl trifft somit auf dem Positionsdetektor 16 auf und ein zweiter Teilstrahl auf dem Positionsdetektor 16ʹ.

In den Figuren 3B und 3C sind jeweils Situationen gezeigt, in denen das Werkstück 200 unter einem Winkel von 90° bzw. 60° gebogen ist. Wie dies zu erkennen ist, verschiebt sich die Tastscheibe 20 mit abnehmenden Winkel nach oben, so dass auch die beiden Teilstrahlen nach oben versetzt werden. Da das Werkstück 200 hier nicht verkippt ist, d.h., dass die Längsachse L des Sensors mit der Winkelhalbierenden des Werkstückwinkels zusammenfällt, bleibt die Tastscheibe 20 vertikal ausgerichtet, was bedeutet, dass die Lichtstrahlen jeweils auf gleicher Höhe auf den Positionsdetektoren 16, 16ʹ auftreffen.

Ist das Werkstück 200 jedoch verkippt, wie dies in Figur 3D gezeigt ist, so wird auch die Tastscheibe 20 gegenüber dem Gehäuse 10 verschwenkt, was bedeutet, dass auch der Kulissenstein 12 um seine Achse gedreht wird. Dies bewirkt, dass die beiden Teilstrahlen nun nicht mehr auf gleicher Höhe auf die Positionsdetektoren 16 und 16ʹ auftreffen, sondern dass eine Höhendifferenz zwischen den beiden Auftreffpunkten besteht. Somit kann mit der gezeigten Ausführungsform nicht nur der Winkel selbst gemessen werden, sondern auch eine Verkippung des Werkstücks 200. Es werden somit zwei Positionsinformationen erhalten.

Bei der in den Figuren 3A bis 3D gezeigten Ausführungsform erfüllt die Verschwenkbarkeit des Kulissensteins 12 um die Achse senkrecht zur Längsachse L des Winkelsensors eine Doppelfunktion: Zum einen erleichtert sie, wie bereits beschrieben, das Einsetzen der Tastscheibe 20 in das Gehäuse 10 und zum anderen ermöglicht sie die Detektierung einer Verkippung des Werkstücks 200, dessen Biegewinkel zu messen ist.

Wenn demgegenüber bei der Ausführungsform der Figur 2 die Verkippung gemessen werden soll, so muss ein zusätzlicher Sensor eingesetzt werden, welcher die Verkippung ermittelt, beispielsweise ein magnetischer Hallsensor, da in jener Ausführungsform nur ein optischer Positionsdetektor 16 vorhanden ist.

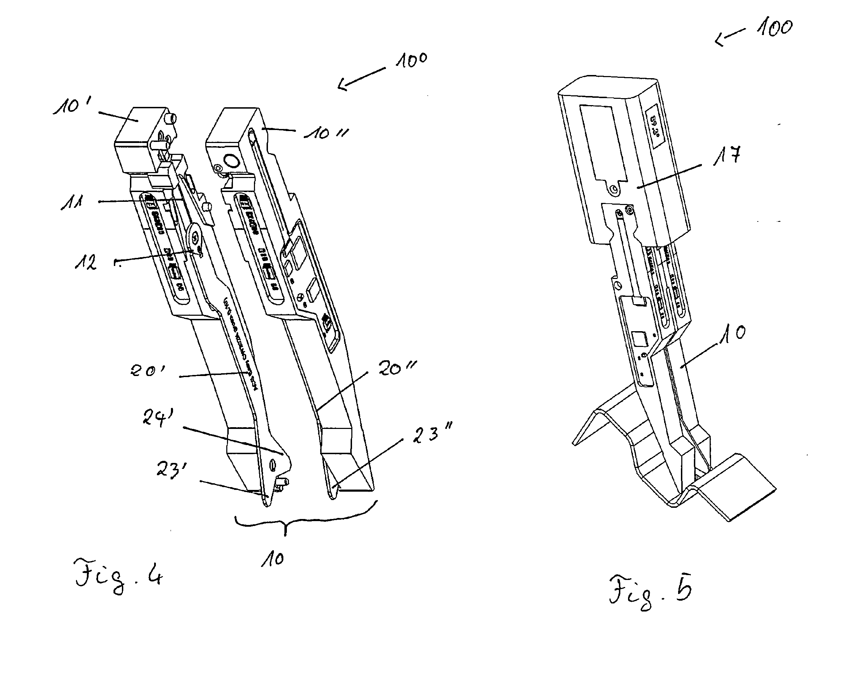

In Figur 4 ist in perspektivischer Ansicht der Aufbau einer weiteren Ausführungsform eines erfindungsgemäßen Biegewinkelsensors 100 gezeigt. Das Gehäuse 10 umfasst hier zwei Gehäusehälften 10ʹ und 10ʹʹ die jeweils analog der Ausführungsform der Figur 2 aufgebaut sind. So ist in der ersten Gehäusehälfte 10ʹ insbesondere die Ausnehmung 11 zu erkennen, in welcher der Kulissenstein 12 geführt ist. Im Unterschied zu der in Figur 2 gezeigten Ausführungsform sind hier jedoch insgesamt zwei Ausnehmungen und entsprechend zwei Kulissensteine vorhanden, die an jeweils einer Tastscheibe 20ʹ, 20ʹʹ angreifen. Mit anderen Worten dient der in dieser Figur gezeigte Biegewinkelsensor 100 der Messung mit zwei Tastscheiben 20ʹ, 20ʹʹ, die jeweils bezüglich der Geometrie ihrer Schenkel 23ʹ, 24ʹ bzw. 23ʹʹ, 24ʹʹ (24ʹʹ nicht gezeigt) verschieden voneinander ausgebildet sind.

Beim Ansetzen an ein gewinkeltes Werkstücks 200 (hier nicht gezeigt) verschieben sich die beiden Tastscheiben 20ʹ, 20ʹʹ unterschiedlich weit in Z-Richtung, so dass eine Relativposition zueinander gemessen werden kann.

Eine weitere Ausführungsform der Erfindung wird nun mit Bezug auf Figur 5 beschrieben.

Die hier gezeigte Ausführungsform ist ähnlich derjenigen von Figur 4 ausgebildet, wobei auf dem Gehäuse 10 jedoch ein Aufsatz 17 aufgebracht ist, welcher eine Aufnahme für einen Akkumulator oder eine Batterie enthält. Dies bedeutet, dass ein so ausgebildeter Winkelsensor 100 im Handbetrieb eingesetzt werden kann und unabhängig von einer Stromzuführung über ein Kabel arbeitet. Hierdurch können auch Winkel an verdeckten Enden eines Werkstücks gemessen werden. Der Aufsatz 17 kann darüber hinaus für die Aufnahme einer Elektronikeinheit zur Auswertung von Messergebnissen ausgelegt sein sowie eine Anzeige zum Sichtbarmachen der Messergebnisse umfassen.

Gemäß einer Alternative kann der Aufsatz 17 auch einstückig mit dem Gehäuse 10 ausgebildet sein. Alternativ zum Einsatz einer Elektronikeinheit für die Auswertung können die Messsignale auch, beispielsweise durch eine drahtlose Übertragung, an eine externe Elektronik weitergegeben werden.

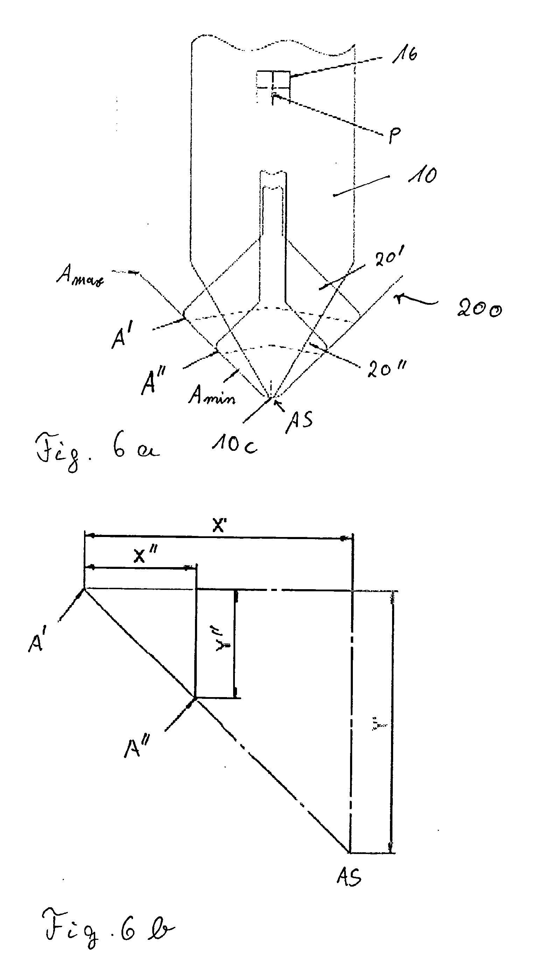

Mit Bezug auf die Figuren 6a und 6b wird nunmehr eine Ausführungsform eines erfindungsgemäßen Messverfahren veranschaulicht. Figur 6a zeigt in Schnittdarstellung den Biegewinkelsensor von Figur 4, welcher zwei Tastscheiben 20ʹ, 20" enthält. Wie dies zu erkennen ist, wird eine Spitze 10c des Gehäuses 10 auf das Zentrum einer Biegung des Werkstücks 200 aufgesetzt. Hierdurch verschieben sich die beiden Tastscheiben 20ʹ, 20ʹʹ entsprechend ihren Größen unterschiedlich weit in Bezug auf das Gehäuse 20 nach oben. Die jeweiligen Verschiebungen werden mit optischen Positionsdetektoren erfasst, wobei hier ein optischer Positionsdetektor 16 gezeigt ist, der z.B. eine Größe von 4 mm x 4 mm aufweisen kann. In der Figur ist an der markierten Stelle P ein Lichtpunkt angedeutet, welcher von einer der Tastscheiben reflektiert wird.

In den Figuren 6a und 6b bezeichnen die Punkte A' und Aʺ die jeweiligen Auflagepunkte der Tastscheiben 20' bzw. 20" und AS zeigt den Auflagepunkt der Gehäusespitze 10c. Mit Aₘᵢₙ und Aₘₐₓ ist die minimale bzw. maximale Verschiebungsposition der Tastscheiben gekennzeichnet, durch welche der Messbereich definiert ist.

Wenn nun im Ausführungsbeispiel der Figur 6a eine Absolutmessung mit hoher Auflösung, beispielsweise durch die Tastscheibe 20ʹ, zur Messung des Biegewinkels des Werkstücks 200 durchgeführt wurde, kann es passieren, dass sich die Gehäusespitze 10c vom Blech des Werkstücks 200 abhebt, während die Tastscheiben 20ʹ, 20" noch am Blech anliegen. Um einen daraus resultierenden Messfehler zu kompensieren, wird die Auffederung des Blechs noch durch eine Relativmessung der Verschiebung der beiden Tastscheiben 20ʹ, 20ʺ zueinander gemessen. Anschließend kann das Werkstück einer Nachbiegung unterzogen werden, um einen vorgegebenen Sollwinkel zu erreichen. Sobald die Gehäusespitze 10c wieder in der Biegung anliegt, kann erneut eine Absolutmessung mit hoher Auflösung durchgeführt werden.

In einer Alternative kann auch ein Fehler, der bei der Absolutmessung entsteht, mit einer Relativmessung erfasst werden, wobei anschließend ein Korrekturwert gespeichert wird, der für zukünftige Absolutmessungen verwendet werden kann. Auf diese Weise kann z.B. ein Fehler, der durch Eintauchen bzw. Eindringen der Gehäusespitze 10c in ein weiches Blech entsteht, auf einfache Weise korrigiert werden.

Figur 6b zeigt die Ermittlung eines Absolutmesswertes Δʹ= Xʹ/Yʹ, der durch Messung der Verschiebung zwischen der Tastscheibe 20ʹ in Bezug auf die Gehäusespitze erhalten wird, sowie eines Relativmesswertes Δʺ =Xʺ/Yʺ, der durch Messung der Verschiebung der Tastscheibe 20ʹ in Bezug auf die Tastscheibe 20ʺ erhalten wird.

## Patentansprüche

1. Biegewinkelsensor (100), aufweisend ein Gehäuse (10),
wobei an einem Ende (10b) des Gehäuses (10) eine Begrenzung (14) für eine in dem Gehäuse (10) aufzunehmende Tastscheibe vorhanden ist,
**dadurch gekennzeichnet, dass** das Gehäuse (10) mit einer länglichen Ausnehmung (11) versehen ist, in der federnd gelagert ein Kulissenstein (12) geführt ist, dass der Kulissenstein (12) dafür ausgelegt ist, an einer aufzunehmenden Tastscheibe anzugreifen,
und dass im Gehäuse (10) mindestens ein Positionsdetektor (16, 16') zum Erfassen einer Verschiebung des Kulissensteins (12) vorhanden ist.

2. Biegewinkelsensor (100) nach Anspruch 1, **dadurch gekennzeichnet, dass** der Kulissenstein (12) einen Vorsprung (12a) aufweist und dafür ausgelegt ist, mit seinem Vorsprung (12a) an einer aufzunehmenden Tastscheibe anzugreifen.

3. Biegewinkelsensor (100) nach Anspruch 1 oder 2, **dadurch gekennzeichnet, dass** der Kulissenstein (12) um eine senkrecht zur Längsachse L des Gehäuses (10) verlaufende Achse schwenkbar gelagert ist.

4. Biegewinkelsensor (100) nach einem der vorstehenden Ansprüche, **dadurch gekennzeichnet, dass** eine Lichtquelle (15) am oder innerhalb des Kulissensteins (12) vorhanden ist, wobei der Positionsdetektor ein optischer Positionsdetektor (16, 16') ist, der seitlich der Ausnehmung im Gehäuse angebracht ist.

5. Biegewinkelsensor (100) nach einem der Ansprüche 1 bis 3, **dadurch gekennzeichnet, dass** am oder innerhalb des Kulissensteins (12) ein Strahlteiler vorhanden ist, welcher einen von einer im Gehäuse (10) vorhandenen Lichtquelle (15) kommenden Lichtstrahl in zwei unter einem Winkel von 180° zueinander verlaufende Teilstrahlen aufspaltet, wobei jeweils ein optischer Positionsdetektor (16, 16') zu beiden Seiten der Ausnehmung (11) am Gehäuse (10) angebracht ist.

6. Biegewinkelsensor (100) nach einem Anspruch 5, **dadurch gekennzeichnet, dass** der Strahlteiler als Prisma ausgebildet ist.

7. Biegewinkelsensor (100) nach einem der vorstehenden Ansprüche, **dadurch gekennzeichnet, dass** die Begrenzung (14) als eine Ausbuchtung ausgebildet ist.

8. Biegewinkelsensor (100) nach einem der vorstehenden Ansprüche, **dadurch gekennzeichnet, dass** das Gehäuse (10) zweiteilig ausgebildet ist, wobei in jeder.Gehäusehälfte (10', 10") eine längliche Ausnehmung (11) mit einem darin geführten und federnd gelagerten Kulissenstein (12) vorhanden ist.

9. Biegewinkelsensor (100) nach einem der vorstehenden Ansprüche, **dadurch gekennzeichnet, dass** in dem Gehäuse (10) eine Tastscheibe (20) aufgenommen ist, welche zwischen den Kulissenstein (12) und die Begrenzung (14) geklemmt ist, wobei die Tastscheibe (20) eine erste Vertiefung (21) aufweist, in welche der Vorsprung (12a) des Kulissensteins (12) eingreifen kann.

10. Biegewinkelsensor (100) nach Anspruch 9, **dadurch gekennzeichnet, dass** die erste Vertiefung (21) der Tastscheibe (20) V-förmig ausgebildet, wobei der Vorsprung (12a) des Kulissensteins (12) vorzugsweise so geformt ist, dass er passgenau in die erste Vertiefung (21) der Tastscheibe (20) einführbar ist.

11. Biegewinkelsensor (100) nach Anspruch 9 oder 10, **dadurch gekennzeichnet, dass** die Tastscheibe (20) an einem Ende
eine Gabelung aufweist, welche zwei Schenkel (23, 24) ausbildet, zwischen denen eine zweite Vertiefung (22) eingeformt ist.

12. Biegewinkelsensor (100) nach einem der vorstehenden Ansprüche, **dadurch gekennzeichnet, dass** die Tastscheibe (20) in dem Gehäuse (10) parallel zur Längsachse L des Gehäuses (10) beweglich ist, und dass eine Aufnahme für eine Batterie oder einen Akkumulator vorhanden ist, die leitend mit dem Positionsdetektor (16, 16') verbunden ist.

13. Biegewinkelsensor (100) nach Anspruch 12, **dadurch gekennzeichnet, dass** die Aufnahme für den Akkumulator oder die Batterie innerhalb des Gehäuses (10) ausgebildet oder in Form eines Aufsatzes (17) vorhanden ist, welcher auf das Gehäuse (10) des Biegewinkelsensors (100) aufsteckbar ist.

14. Biegewinkelsensor (100) nach Anspruch 13, **dadurch gekennzeichnet, dass** an der Außenseite des Gehäuses (10) oder des Aufsatzes (17) ein Anzeigeelement vorhanden ist, welches dafür ausgelegt ist, einen gemessenen Winkel für einen Benutzer sichtbar zu machen.

15. Biegewinkelsensor (100) nach einem der Ansprüche 13 oder 14, **dadurch gekennzeichnet, dass** in das Gehäuse (10) oder den Aufsatz (17) eine Auswertelektronik integriert ist, welche dafür ausgelegt ist, aus den von dem Positionssensor (16, 16') ermittelten Daten zumindest die Größe eines gemessenen Winkels zu ermitteln.

16. Verfahren zum Messen eines Biegewinkels, aufweisend:
- Aufsetzen eines Biegewinkelsensors (100) nach einem der Ansprüche 9 bis 11 auf ein Werkstück, so dass eine am Ende (10b) vorhandene Spitze (10c) des Gehäuses (10) in einer Biegung des Werkstücks aufliegt; und
- Messen der Verschiebung der Tastscheibe (20) in Bezug auf das Gehäuse (10).

17. Verfahren nach Anspruch 16, **dadurch gekennzeichnet, dass** ein Biegewinkelsensor (100) eingesetzt wird, in dem zwei Tastscheiben (20', 20") vorhanden sind, wobei die Verschiebung jeder der Tastscheiben (20a, 20b) in Bezug auf das Gehäuse gemessen wird und eine Differenz der beiden resultierenden Verschiebungen ermittelt wird.

18. Verfahren nach Anspruch 16 oder 17, **dadurch gekennzeichnet, dass** es weiter das Einsetzen der Tastscheibe (20), das Messen der Länge der eingesetzten Tastscheibe (20) und das Vergleichen des gemessenen Wertes mit einer eingespeicherten Tabelle zur Identifizierung der eingesetzten Tastscheibe (20) vor dem Schritt des Aufsetzens des Biegewinkelsensors (100) auf das Werkstück umfasst.

## Claims

1. Bending angle sensor (100) comprising a housing (10),
wherein a limit stop (14) for a tactile disk to be accommodated in the housing (10) is provided at one end (10b) of the housing (10),
**characterized in**
**that** the housing (10) is provided with a longitudinal clearance (11) in which a sliding block (12) is guided in a springy supported manner,
**that** the sliding block (12) is configured such that it acts to a tactile disk to be accommodated, and
**that** at least one position detector (16, 16') for detecting a shift of the sliding block (12) is provided.

2. Bending angle sensor (100) according to claim 1, **characterized in that** the sliding block (12) has a protrusion (12a) and that it is configured such that it acts to a tactile disk to be accommodated with its protrusion (12a).

3. Bending angle sensor (100) according to claim 1 or 2, **characterized in that** the sliding block (12) is supported pivotably about an axis being perpendicular with respect to the longitudinal axis L of the housing (10).

4. Bending angle sensor (100) according to any of the preceding claims, **characterized in that** a light source (15) is provided at or within the sliding block (12), wherein the position detector is an optical position detector (16, 16') arranged laterally of the clearance in the housing.

5. Bending angle sensor (100) according to any of the claims 1 to 3, **characterized in that** a beam splitter is provided at or within the sliding block (12), the beam splitter splits a light beam coming from the light source (15) provided in the housing (10) in two partial beams running at an angle of 180° with respect to each other, wherein an optical position detector (16, 16') is respectively arranged at both sides of the clearance (11) at the housing (10).

6. Bending angle sensor (100) according to claim 5, **characterized in that** the beam splitter is configured as a prism.

7. Bending angle sensor (100) according to any of the preceding claims, **characterized in that** the limit stop (14) is configured as a protrusion.

8. Bending angle sensor (100) according to any of the preceding claims, **characterized in that** the housing (10) is configured in a two-piece manner, wherein a longitudinal clearance (11) with a sliding block (12) being guided and springy supported therein is provided in each half housing (10', 10'').

9. Bending angle sensor (100) according to any of the preceding claims, **characterized in that** a tactile disk (20) is accommodated in the housing (10), the tactile disk (20) is clamped between the sliding block (12) and the limit stop (14), wherein the tactile disk (20) comprises a first recess (21) in which the protrusion (12a) of the sliding block (12) is engageable.

10. Bending angle sensor (100) according to claim 9, **characterized in that** the first recess (21) of the tactile disk (20) is configured as being V-shaped, wherein the protrusion (12a) of the sliding block (12) is formed preferably such that it is insertable in an exactly fitting manner into the first recess (21) of the tactile disk (20).

11. Bending angle sensor (100) according to claim 9 or 10, **characterized in that**, at one end, the tactile disk (20) has a fork forming two legs (23, 24) between which a second recess (22) is formed.

12. Bending angle sensor (100) according to any of the preceding claims, **characterized in that**, in the housing, the tactile disk (20) is movable parallel with respect to the longitudinal axis L of the housing (10), and that a retainer, connected in a conducting manner to the position detector (16, 16'), for a battery or an accumulator is provided.

13. Bending angle sensor (100) according to claim 12, **characterized in that** the retainer for the accumulator or the battery is formed within the housing (10) or in the form of an attachment (17) being attachable to the housing (10) of the bending angle sensor (100).

14. Bending angle sensor (100) according to claim 13, **characterized in that** a display member designed to render the measured angle visible for the user is provided at the outside of the housing (10) or of the attachment (17).

15. Bending angle sensor (100) according to any of the claims 13 or 14, **characterized in that** an evaluation electronics designed to determine at least the size of a measured angle from the data determined by the position sensor (16, 16') is integrated in the housing (10) or in the attachment (17).

16. Method for measuring a bending angle, comprising
- attaching a bending angle sensor (100) according to any of the claims 9 to 11 on a work piece such that a tip (10c) of the housing (10) provided at an end (10b) seats in the bend of the work piece; and
- measuring the shift of the tactile disk (20) with respect to the housing (10).

17. Method according to claim 16, **characterized in that** a bending angle sensor (100) in which two tactile disks (20', 20") are provided is deployed, wherein the shift of each of the tactile disks (20a, 20b) is measured with respect to the housing and a difference of the two resulting shifts is determined.

18. Method according to claim 16 or 17, **characterized in that** it further includes inserting of the tactile disk (20), measuring of the length of the inserted tactile disk (20) and comparing of the measured value with a stored table for identifying the inserted tactile disk (20) before the step of attaching the bending angle sensor (100) on the work piece.

## Revendications

1. Capteur d'angle de pliage (100), comportant un boîtier (10),
une limitation (14) étant présentée à une extrémité (10b) du boîtier (10) pour une plaque palpeuse à monter dans le boîtier (10),
**caractérisé en ce que** le boîtier (10) est pourvu d'un évidement oblong (11), où est guidé un coulisseau (12) monté de manière élastique,
**en ce que** le coulisseau (12) est prévu pour entrer en contact avec une plaque palpeuse à monter,
et **en ce qu'**au moins un détecteur de position (16, 16') est présent dans le boîtier (10) pour détecter un déplacement du coulisseau (12).

2. Capteur d'angle de pliage (100) selon la revendication 1, **caractérisé en ce que** le coulisseau (12) présente une saillie (12a) et est prévu pour entrer en contact par sa saillie (12a) avec une plaque palpeuse à monter.

3. Capteur d'angle de pliage (100) selon la revendication 1 ou 2, **caractérisé en ce que** le coulisseau (12) est monté de manière pivotante autour d'un axe s'étendant perpendiculairement à l'axe longitudinal L du boîtier (10).

4. Capteur d'angle de pliage (100) selon l'une des revendications précédentes, **caractérisé en ce qu'**une source lumineuse (15) est présente contre le coulisseau (12) ou à l'intérieur de celui-ci, le détecteur de position étant un détecteur optique de position (16, 16') disposé dans le boîtier latéralement à l'évidement.

5. Capteur d'angle de pliage (100) selon l'une des revendications 1 à 3, **caractérisé en ce qu'**un séparateur de faisceau est présent contre le coulisseau (12) ou à l'intérieur de celui-ci, lequel divise un faisceau lumineux provenant d'une source lumineuse (15) présente dans le boîtier (10) en deux faisceaux partiels s'étendant suivant un angle de 180° l'un par rapport à l'autre, un détecteur optique de position (16, 16') étant disposé sur le boîtier (10) de part et d'autre de l'évidement (11).

6. Capteur d'angle de pliage (100) selon la revendication 5, **caractérisé en ce que** le séparateur de faisceau est réalisé sous forme de prisme.

7. Capteur d'angle de pliage (100) selon l'une des revendications précédentes, **caractérisé en ce que** la limitation (14) est réalisée sous forme d'indentation.

8. Capteur d'angle de pliage (100) selon l'une des revendications précédentes, **caractérisé en ce que** le boîtier (10) est constitué de deux pièces, un évidement oblong (11) étant présenté dans chaque moitié de boîtier (10', 10"), avec un coulisseau (12) guidé à l'intérieur de celui-ci et monté de manière élastique.

9. Capteur d'angle de pliage (100) selon l'une des revendications précédentes, **caractérisé en ce qu'**une plaque palpeuse (20) est montée dans le boîtier (10), laquelle est serrée entre le coulisseau (12) et la limitation (14), ladite plaque palpeuse (20) présentant une première gorge (21), où peut s'engager la saillie (12a) du coulisseau (12).

10. Capteur d'angle de pliage (100) selon la revendication 9, **caractérisé en ce que** la première gorge (21) de la plaque palpeuse (20) est réalisée en forme de V, la saillie (12a) du coulisseau (12) étant préférentiellement formée de manière à être insérable avec précision d'ajustement dans la première gorge (21) de la plaque palpeuse (20).

11. Capteur d'angle de pliage (100) selon la revendication 9 ou 10, **caractérisé en ce que** la plaque palpeuse (20) présente une fourche à une extrémité,
laquelle forme deux branches (23, 24) entre lesquelles est ménagée une deuxième gorge (22).

12. Capteur d'angle de pliage (100) selon l'une des revendications précédentes, **caractérisé en ce que** la plaque palpeuse (20) est mobile dans le boîtier (10) parallèlement à l'axe longitudinal L du boîtier (10), et **en ce qu'**un logement est prévu pour une pile ou un accumulateur, lequel est relié de manière conductrice au détecteur de position (16, 16').

13. Capteur d'angle de pliage (100) selon la revendication 12, **caractérisé en ce que** le logement pour la pile ou l'accumulateur est réalisé à l'intérieur du boîtier (10) ou sous la forme d'un capuchon (17) pouvant être fiché sur le boîtier (10) du capteur d'angle de pliage (100).

14. Capteur d'angle de pliage (100) selon la revendication 13, **caractérisé en ce qu'**un élément indicateur est présenté à l'extérieur du boîtier (10) ou du capuchon (17), lequel est prévu pour rendre visible un angle mesuré pour un utilisateur.

15. Capteur d'angle de pliage (100) selon l'une des revendications 13 ou 14, **caractérisé en ce qu'**une électronique d'évaluation est intégrée au boîtier (10) ou au capuchon (17), laquelle est prévue pour déterminer au moins la grandeur d'un angle mesuré à partir des données communiquées par le détecteur de position (16, 16').

16. Procédé de mesure d'un angle de pliage, comprenant les étapes suivantes :
- mise en place d'un capteur d'angle de pliage (100) selon l'une des revendications 9 à 11 sur une pièce, de manière à faire reposer une pointe (10c) du boîtier (10) présentée à l'extrémité (10b) dans un pli de la pièce ; et
- mesure du déplacement de la plaque palpeuse (20) par rapport au boîtier (10).

17. Procédé selon la revendication 16, **caractérisé en ce qu'**un capteur d'angle de pliage (100) est utilisé, où deux plaques palpeuses (20', 20") sont présentes, le déplacement de chacune desdites plaques palpeuses (20a, 20b) par rapport au boîtier étant mesuré et une différence des deux déplacements résultants étant déterminée.

18. Procédé selon la revendication 16 ou 17, **caractérisé en ce que** celui-ci comprend en outre l'utilisation de la plaque palpeuse (20), la mesure de la longueur de la plaque palpeuse (20) utilisée et la comparaison de la valeur mesurée avec un tableau mémorisé pour l'identification de la plaque palpeuse (20) utilisée avant l'étape de mise en place du capteur d'angle de pliage (100) sur la pièce.
